# EUROPEAN PATENT APPLICATION

(11) **EP 4 794 399 A1**
(43) Date of publication of application: **19.08.2026**
(21) Application number: 26157511.2
(22) Date of filing: 10.02.2026
(51) Int. Cl.: H04W 48/16, H04W 48/20

(54) **SYSTEMS AND METHODS FOR REDUCING CELL SEARCH TIME**

(30) Priority: 14.02.2025 US 202563759019 P; 05.05.2025 US 202519199380
(71) Applicant: Samsung Electronics Co., Ltd., Suwon-si, Gyeonggi-do 16677 (KR)
(72) Inventor: MOON, Jang Wook, San Jose, CA, 95134 (US); BAE, Jung Hyun, San Jose, CA, 95134 (US)
(74) Representative: Kuhnen & Wacker Patent- und Rechtsanwaltsbüro PartG mbB

(57) **Abstract**

Systems, methods, and apparatuses are disclosed for reducing cell search time. In one or more examples, the systems, devices, and methods include discarding (905) a first candidate of a first set of candidates of carrier frequencies based the first candidate failing to satisfy a power ratio threshold; storing (910) a second candidate based on the second candidate satisfying the power ratio threshold; generating (915), at the UE, an increased power ratio threshold based on the respective power ratios of the two or more accumulations of the second candidate satisfying the minimum power ratio threshold, the increased power ratio threshold being greater than the power ratio threshold; identifying (920), based on the UE storing one or more candidates, a second set of candidates that is a subset of the first set of candidates, the second set of candidates including the second candidate; and establishing (925) a connection to a cell based on the second candidate.

## Description

### TECHNICAL FIELD

The disclosure relates generally to cellular systems. In particular, the subject matter relates to reducing cell search time in cellular communications.

### SUMMARY

The present background section is intended to provide context only, and the disclosure of any concept in this section does not constitute an admission that said concept is prior art. In various embodiments, the systems and methods described herein include systems, methods, and apparatuses for reducing cell search time in cellular communications.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

Wireless communications systems are widely deployed to provide various types of communication content, such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (e.g., a Long Term Evolution (LTE) system, or a New Radio (NR) system). A wireless multiple-access communications system may include a number of base stations or access network nodes, each simultaneously supporting communication for multiple communication devices, which may be otherwise known as user equipment (UE). A base station may provide multiple UEs access to certain network services, such as transmission of voice and data communications.

The systems and methods described herein may be based on and/or may include cell search. Cell search (CS) may be configured to find the best cell by calculating the correlation of the primary synchronization signal (PSS) and secondary synchronization signal (SSS). Based on (a) the relatively large number of PSS/SSS sequences for each possible cell identifier (CID), (b) a relatively large number of timing hypothesis, and (c) multiple evolved universal mobile telecommunications system (UMTS) terrestrial radio access absolute radio frequency channel number (EARFCN) in a given band, a UE may analyze possible hypothesis (e.g., all possible hypotheses). For example, the UE may analyze possible hypothesis in frequency (e.g., EARFCN, global synchronization channel number (GSCN), etc.) in time, physical cell identifier (PCID), etc. However, this CS operation can increase latency (e.g., reduce system availability, reduce system efficiency) and/or increase power consumption (e.g., reduce battery power, reduce system availability). The systems and methods described herein can reduce CS time, resulting in reduced power consumption, reduced latency, increased system availability, increased system efficiency, etc.

Some systems (e.g., some CS schemes) can employ a fixed number of accumulations to ensure reliable detection results even at low signal-to-noise ratio (SNR). However, the configuration of these CS processes can increase process latency, making CS relatively slow. Also, such CS processes may rely on multiple hypotheses in time and frequency, which can cause the CS processes to consume a relatively large amount of available power.

In some cases, there may be a large distance between a UE and a serving node of the UE, such as when one or more of a gateway, base station, or the UE are at a high altitude relative to one another (e.g., in a non-terrestrial network (NTN) or system with high altitude platform stations (HAPSs)). Because of the relatively large distance between wireless nodes in such cases, signal strength for communications may be relatively low, and there may be a relatively long round-trip delay or propagation delay in message transmissions (e.g., relative to terrestrial networks). Further, communications in such situations may experience relatively large amounts of Doppler shift due to fast movement of nodes relative to one another. In some cases, a UE may perform a synchronization procedure to synchronize communications with an NTN device. In some cases, the UE may lose the synchronization, resulting in data communication errors. Efficient techniques for managing communications to enhance efficiency and reliability may thus be desirable for such systems.

The systems and methods may address the issues of latency and power consumption associated with some systems. In some cases, the systems and methods may be configured to discard noisy cells (e.g., incorrect CID) in a relatively prompt manner (e.g., compared to CS operations of some systems). For example, the systems and methods described herein may be based on discarding a candidate when the candidate does not exhibit a desired incremental energy growth. In some cases, discarding a candidate may be based on the systems and methods of early discard (ED) described herein.

In some cases, the systems and methods may be configured to detect reliable cells in a relatively prompt manner. For example, the systems and methods described herein may be based on terminating a correlation operation when a decision metric is determined to be sufficiently reliable (e.g., satisfies a reliability threshold). In some cases, terminating a correlation operation may be based on the systems and methods of early termination (ET) described herein.

The systems and methods described herein include multiple advantages and benefits. For example, the systems and methods described herein reduce latency associated with CS operations, which can increase system availability, increase system efficiency, and increase system reliability. Also, the systems and methods described herein reduce power consumption associated with CS operations, which can reduce battery power consumption and further increase system reliability and system availability.

In some aspects, the techniques described herein relate to a method of cell search, the method including: discarding, at a user equipment (UE), a first candidate of a first set of candidates of carrier frequencies based on at least a power ratio of a first accumulation of the first candidate and a power ratio of a second accumulation of the first candidate failing to satisfy a power ratio threshold; storing, at the UE, a second candidate of the first set of candidates based on respective power ratios of two or more accumulations of the second candidate satisfying the power ratio threshold and satisfying a minimum power ratio threshold; and establishing a connection to a cell based on the second candidate.

In some aspects, the techniques described herein relate to a method, further including generating, at the UE, an increased power ratio threshold based on the respective power ratios of the two or more accumulations of the second candidate satisfying the minimum power ratio threshold, the increased power ratio threshold being greater than the power ratio threshold.

In some aspects, the techniques described herein relate to a method, further including discarding a third candidate of the first set of candidates based at least on power ratios of two or more accumulations of the third candidate failing to satisfy the increased power ratio threshold.

In some aspects, the techniques described herein relate to a method, wherein the first candidate is discarded further based on the power ratio of the first accumulation of the first candidate and the power ratio of the second accumulation of the first candidate failing to satisfy the minimum power ratio threshold.

In some aspects, the techniques described herein relate to a method, wherein: the UE is configured to perform L accumulations based on the first candidate, and the UE performs less than L accumulations based on the discarding of the first candidate.

In some aspects, the techniques described herein relate to a method, further including determining a highest correlation peak energy and a second highest correlation peak energy based on correlation analysis between a known reference sequence and a signal associated with the second candidate that is received by the UE.

In some aspects, the techniques described herein relate to a method, wherein the second highest correlation peak energy is selected based on a first primary synchronization signal (PSS) candidate associated with the highest correlation peak energy being at least two samples apart from a second PSS candidate associated with the second highest correlation peak energy.

In some aspects, the techniques described herein relate to a method, wherein the second highest correlation peak energy may be selected based on at least one of: a first secondary synchronization signal (SSS) candidate associated with the highest correlation peak energy having a first cell ID that is different from a second cell ID of a second SSS candidate associated with the second highest correlation peak energy, or the first SSS candidate associated with the highest correlation peak energy having a first time-based boundary that is different from a second time-based boundary of the second SSS candidate associated with the second highest correlation peak energy.

In some aspects, the techniques described herein relate to a method, further including determining a ratio of the highest correlation peak energy and the second highest correlation peak energy satisfies an energy threshold.

In some aspects, the techniques described herein relate to a method, wherein: the UE is configured to perform M accumulations of correlation peak energies associated with the second candidate, and the UE performs less than M accumulations based on the ratio of the highest correlation peak energy and the second highest correlation peak energy satisfying the energy threshold.

In some aspects, the techniques described herein relate to a method, further including decoding a master information block associated with the cell based on the ratio of the highest correlation peak energy and the second highest correlation peak energy satisfying the energy threshold, wherein establishing the connection to the cell is further based on decoding the master information block.

In some aspects, the techniques described herein relate to a method, further including identifying, based on the UE storing one or more candidates, a second set of candidates that is a subset of the first set of candidates, the second set of candidates including the second candidate, wherein: accumulations associated with the first set of candidates are based on primary synchronization signals received by the UE, and accumulations associated with the second set of candidates are based on the primary synchronization signals and secondary synchronization signals received by the UE.

In some aspects, the techniques described herein relate to a device including: one or more processors; and memory storing instructions that, when executed by the one or more processors, cause the device to: discard, at the device, a first candidate of a first set of candidates of carrier frequencies based on at least a power ratio of a first accumulation of the first candidate and the power ratio of a second accumulation of the first candidate failing to satisfy a power ratio threshold; store, at the device, a second candidate of the first set of candidates based on respective power ratios of two or more accumulations of the second candidate satisfying the power ratio threshold and satisfying a minimum power ratio threshold; and establish a connection to a cell based on the second candidate.

In some aspects, the techniques described herein relate to a device, wherein the instructions, when executed by the one or more processors, further cause the device to generate, at the device, an increased power ratio threshold based on the respective power ratios of the two or more accumulations of the second candidate satisfying the minimum power ratio threshold, the increased power ratio threshold being greater than the power ratio threshold.

In some aspects, the techniques described herein relate to a device, wherein the instructions, when executed by the one or more processors, further cause the device to discard a third candidate of the first set of candidates based at least on power ratios of two or more accumulations of the third candidate failing to satisfy the increased power ratio threshold.

In some aspects, the techniques described herein relate to a device, wherein the first candidate is discarded further based on the power ratio of the first accumulation of the first candidate and the power ratio of the second accumulation of the first candidate failing to satisfy the minimum power ratio threshold.

In some aspects, the techniques described herein relate to a device, wherein: the device is configured to perform L accumulations based on the first candidate, and the device performs less than L accumulations based on the discarding of the first candidate.

In some aspects, the techniques described herein relate to a device, wherein the instructions, when executed by the one or more processors, further cause the device to determine a highest correlation peak energy and a second highest correlation peak energy based on correlation analysis between a known reference sequence and a signal associated with the second candidate that is received by the device.

In some aspects, the techniques described herein relate to a non-transitory computer-readable medium storing code that includes instructions executable by one or more processors to: discard a first candidate of a first set of candidates of carrier frequencies based on at least a power ratio of a first accumulation of the first candidate and the power ratio of a second accumulation of the first candidate failing to satisfy a power ratio threshold; store a second candidate of the first set of candidates based on respective power ratios of two or more accumulations of the second candidate satisfying the power ratio threshold and satisfying a minimum power ratio threshold; and establish a connection to a cell based on the second candidate.

In some aspects, the techniques described herein relate to a non-transitory computer-readable medium, wherein the instructions, when executed by the one or more processors, further cause the one or more processors to: generate an increased power ratio threshold based on the respective power ratios of the two or more accumulations of the second candidate satisfying the minimum power ratio threshold, the increased power ratio threshold being greater than the power ratio threshold; discard a third candidate of the first set of candidates based at least on power ratios of two or more accumulations of the third candidate failing to satisfy the increased power ratio threshold.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein include multiple advantages and benefits. For example, the systems and methods described herein reduce the number of possible candidates by discarding candidates that fail to satisfy dynamic thresholds. The systems and methods described herein provide cell pruning mechanisms that avoid running relatively long accumulations. The systems and methods described herein provide blindly switchable thresholds that enable quicker pruning (e.g., without signal-to-interference-plus-noise ratio (SINR) information). Also, the systems and methods described herein further reduce accumulations based on early terminating mechanisms that select a cell that satisfies an energy threshold, terminating (e.g., early termination of) analysis of any remaining cells.

### BRIEF DESCRIPTION OF THE DRAWINGS

In the following section, the aspects of the subject matter disclosed herein will be described with reference to exemplary embodiments illustrated in the figures, in which:

These and other features and advantages of the present disclosure will be appreciated and understood with reference to the specification, claims, and appended drawings, wherein:
FIG. 1 illustrates an example of a system in accordance with example implementations described herein.
FIG. 2 illustrates an example of a system in accordance with example implementations described herein.
FIG. 3 illustrates an example system flow in accordance with one or more implementations as described herein.
FIG. 4 illustrates an example system flow in accordance with one or more implementations as described herein.
FIG. 5 depicts a flow diagram illustrating an example method associated with the disclosed systems, in accordance with example implementations described herein.
FIG. 6 depicts a block diagram of an electronic device in a network environment, according to an embodiment.
FIG. 7 illustrates an example of a system in accordance with example implementations described herein.
FIG. 8 depicts a flow diagram illustrating an example method associated with the disclosed systems, in accordance with example implementations described herein.
FIG. 9 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the intention is to cover all modifications, equivalents, and alternatives falling within the spirit and scope of the present systems and methods as defined by the appended claims.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms, and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms, and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The techniques described herein include logic to provide reducing cell search time in cellular communications. The logic includes any combination of hardware (e.g., at least one memory, at least one processor), logical circuitry, firmware, and/or software to provide reducing cell search time in cellular communications.

It is noted that accumulation may refer to a process of combining the outputs of matched filters over multiple subframes or time units. Accumulation can help to improve the signal-to-noise ratio (SNR) and make the detection of the PSS and SSS more reliable, especially in low SNR environments. Essentially, accumulation can act as a form of averaging, increasing the confidence in the detection of a cell's synchronization signals

When a UE powers on, the UE may perform one or more steps to find the best cell to camp on, which includes scanning all candidate frequencies, and detecting PSS/SSS signals. In some cases, cell search (CS) may be understood to refer to the detection of PSS/SSS, which may not cover the whole process. The systems and methods described herein may be based on frequency scan and cell search.

In some examples, frequency scan and cell search can include a frequency scan stage (e.g., checking PSS and/or narrowband PSS (NPSS) correlation) for all possible evolved universal terrestrial radio access (E-UTRA) absolute radio frequency channel numbers (EARFCN) in a current frequency band. Frequency scan can generate the best N candidates. If a previously attached EARFCN is not in the N candidates, this can be added giving a total of up to N+1 candidates. It is noted that reference to operations associated with PSS, SSS, NPSS, or NSSS may be applied to PSS, SSS, NPSS, and/or NSSS signals.

In some examples, frequency scan and cell search can include a frequency scan result verification stage. This verification stage can be skipped when the frequency scan stage is not performed. After frequency scan, the UE can select up to N+1 best EARFCN candidates. This verification stage checks PSS/NPSS again for those candidates with potential temporal variation due to the potentially long elapsed time from the frequency scan stage.

In some examples, frequency scan and cell search can include a cell search stage that checks timing boundaries (e.g., all possible timing boundaries) of the sync signals (e.g., PSS/SSS, NPSS/NSSS) in the currently selected EARFCN among the surviving up to N+1 best EARFCN candidates. For each EARFCN, the cell ID and the best timing boundary may be determined as an output (e.g., final output) and the PBCH decoding may be attempted for the chosen best signal location. The frequency scan and cell search process can be repeated with the next EARFCN if the current candidate is not successful.

The systems and methods of Early Discard and/or Early Termination described herein may be based on the incremental behavior of correlation energy at every accumulation to identify and using this information to identify incorrect cells that do not follow this behavior. For example, values in accumulations may increase when the candidate is the correct frequency, while incorrect cells do not increase in value with accumulations regardless of how many accumulations are performed. The systems and methods described herein may be based on cell pruning behavior and mechanisms that avoid running relatively long accumulations, providing correlation terminating behavior without running full accumulations. In some cases, the systems and methods described may be based on dynamically switchable thresholds that enable robust operation without SNR-like information, enabling quicker scanning of all candidates. The systems and methods described herein may be based on robust energy ratio analysis between the best timing hypothesis and its vicinity to minimize accumulations. In some examples, the systems and methods described herein may reduce the number of possible candidates relatively quickly by discarding candidates for which dynamic thresholds are not met. The systems and methods described may be based on blindly switchable thresholds that enable quicker pruning (e.g., without signal-to-interference-plus-noise ratio (SINR) information), further reducing accumulations by early terminating the correlation calculation that already meets an energy threshold.

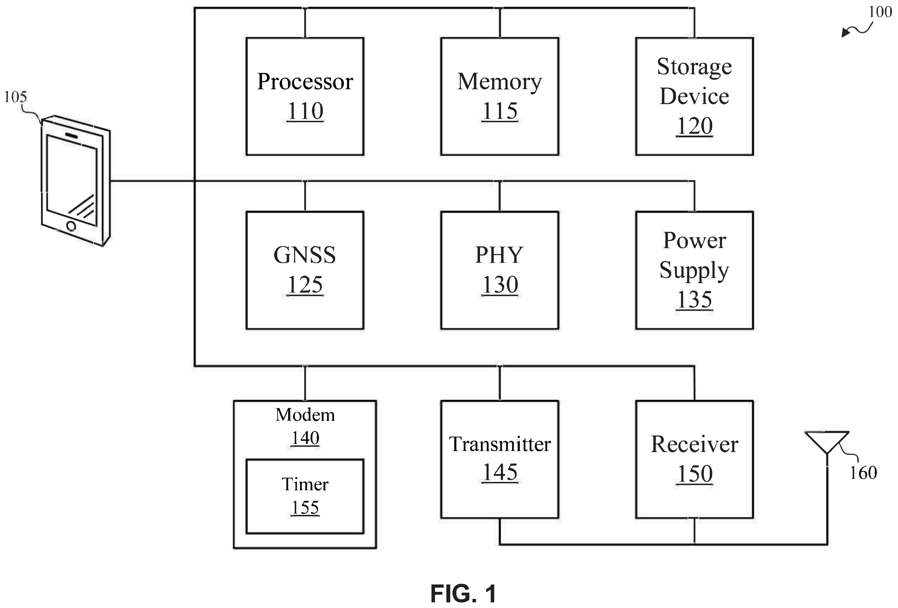

**FIG. 1** illustrates an example of a system 100, of a wireless communications network, that supports reducing cell search time in cellular communications in accordance with example implementations described herein.

As shown, system 100 may include device 105. Device 105 may include a mobile device, a cellphone, a smartphone, a tablet, a laptop, a wearable computing device, an Internet-of-things device, a user equipment (UE), or any wireless/wired network-connected device. Device 105 may communicate with one or more devices via at least one network (e.g., short-range wireless communication network, long-range wireless communication network). The device 105 may include a processor 110, a memory 115, a storage device 120, a global navigation satellite system (GNSS) 125 (e.g., GNSS chipset), a physical layer (PHY) 130, a power supply 135, a modem 140, at least one transceiver (e.g., transmitter 145, receiver 150), and at least one antenna (e.g., antenna 160).

In some cases, device 105 may include an input device, a sound output device, a display device, an audio module, a sensor module, an interface, a haptic module, a camera module, a communication module, a subscriber identification module (SIM) card, and/or an antenna module. In one embodiment, at least one component (e.g., display device, camera module) may be omitted from device 105, or one or more other components may be added to device 105. Some of the components of device 105 may be implemented as at least one integrated circuit (IC). For example, a sensor module (e.g., a fingerprint sensor, an iris sensor, or an illuminance sensor) may be embedded in a display of device 105.

In some cases, processor 110 may execute software (e.g., a program) to control at least one other component (e.g., a hardware, a software component, etc.) of device 105 coupled with processor 110. Processor 110 may perform various data processing or computations.

As at least part of the data processing or computations, processor 110 may load a command or data received from another component (e.g., modem 140, receiver 150, etc.) in memory 115, process the command or the data stored in memory 115, and store resulting data in storage device 120. In some cases, processor 110 may include a main processor (e.g., a central processing unit (CPU) or an application processor (AP)), and an auxiliary processor (e.g., a graphics processing unit (GPU), an image signal processor (ISP), a sensor hub processor, and/or a communication processor (CP)) that is operable independently from, or in conjunction with, the main processor. Additionally, or alternatively, the auxiliary processor may be adapted to consume less power than the main processor, or execute a particular function. The auxiliary processor may be implemented as being separate from, or a part of, the main processor.

In some examples, memory 115 may store various data used by at least one component (e.g., processor 110, modem 140, etc.) of device 105. The various data may include, for example, software (e.g., a program, application) and input data or output data for a command related thereto. In some cases, memory 115 may include volatile memory (e.g., random-access memory (RAM) dynamic RAM (DRAM), static RAM (SRAM)) and/or non-volatile memory (e.g., NAND flash memory). In some cases, memory 115 and/or storage device 120 may include internal memory and/or external memory. One or more programs may be stored in the memory 115 as software, and may include, for example, an operating system (OS), middleware, and/or an application.

In some examples, GNSS 125 may enable satellite navigation on device 105. GNSS 125 may include a GNSS chipset (e.g., an integrated circuit (IC) or set of chips) that forms the core of a GNSS receiver. For example, GNSS 125 may enable device 105 to be a GNSS receiver, enabling device 105 to determine its location, time, and velocity using signals from GNSS satellites, which may include at least one of a global positioning system (GPS) satellite, a Galileo satellite, a global navigation satellite system (GLONASS) satellite, etc. GNSS 125 may be configured to receive and process GNSS signals. In some cases, GNSS 125 may be configured to receive messages from modem 140. For example, modem 140 may send a GNSS request to GNSS 125 requesting GNSS information. In some cases, GNSS 125 may receive satellite ephemeris data from a satellite and determine at least one of longitude, latitude, time, and/or velocity of device 105 based on the satellite ephemeris data.

PHY 130 may include an electronic circuit configured to implement physical layer functions of the open systems interconnection (OSI) model in a network interface controller. PHY 130 may connect a link layer device (e.g., medium access control (MAC)) to a physical medium of device 105 (e.g., radio waves, electromagnetic radiation, radiofrequency (RF) energy).

In some examples, power supply 135 (e.g., a battery, a power adapter, power management module, etc.) may supply power to at least one component of device 105. In some examples, power supply 135 may include, for example, a cell (e.g., primary cell) that is not rechargeable, a cell (e.g., secondary cell) that is rechargeable, a fuel cell, etc.

In some examples, modem 140 may enable device 105 to connect to a network (e.g., LTE network, 5G network). In conjunction with transmitter 145 and receiver 150, modem 140 may be configured to manage radio communication, receiving and transmitting signals between a base station and device 105. In some cases, modem 140 may manage encoding and decoding of data, allowing device 105 to send and receive information (e.g., browsing the internet, making calls, or streaming video). Modem 140 may be configured to control one or more aspects of a user plane, managing data transmission between device 105 and the applications or servers accessed by device 105.

As shown, modem 140 may include at least one timer (e.g., timer 155). Timer 155 may be configured to time one or more operations, synchronize communications, indicate or measure a time period, indicate a lapse of time, indicate an expiration, indicate a timeout, etc. In some cases, modem 140 may configure timer 155 based on corresponding information included in a downlink message.

A communication module of device 105 may support establishing a direct (e.g., wired) communication channel and/or a wireless communication channel between device 105 and at least one external electronic device and performing communication via the established communication channel. The communication module may include one or more communication processors that are operable independently from processor 110 and may support a direct (e.g., wired) communication and/or a wireless communication. The communication module may include a wireless communication module (e.g., a cellular communication module, a short-range wireless communication module, a global navigation satellite system communication module such as GNSS 125, etc.) or a wired communication module (e.g., a local area network (LAN) communication module, a power line communication (PLC) module, etc.). A corresponding one of these communication modules may communicate with the external electronic device via at least a first network (e.g., a short-range communication network, such as BLUETOOTH^{™}, wireless-fidelity (Wi-Fi) direct, a standard of the Infrared Data Association (IrDA)) or a second network (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module may identify and/or may authenticate device 105 in a communication network using subscriber information (e.g., international mobile subscriber identity (IMSI)) stored in the subscriber identification module.

In some examples, antenna 160 (e.g., of transmitter 145 and/or receiver 150) may transmit a signal (e.g., RF energy) to and/or receive a signal from or one or more devices external to device 105. Antenna 160 may include one or more antennas, and, therefrom, at least one antenna appropriate for a communication scheme used in the communication network. The signal or the power may then be transmitted or received transmitter 145 and/or receiver 150 of device 105 and an external electronic device via a selected at least one antenna (e.g., antenna 160).

Commands or data may be transmitted or received between device 105 and an external electronic device via a server coupled to at least one network. All or some of the operations executed at device 105 may be executed at one or more external electronic devices. For example, if device 105 performs a function or a service automatically, or in response to a request from a user or another device, device 105, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to device 105. The device 105 may provide the outcome, with or without further processing of the outcome, as at least part of a reply to the request. To that end, a cloud computing, distributed computing, or client-server computing technology may be used, for example.

**FIG. 1** illustrates an example of a wireless communications system 200, of a wireless communications network, that supports reducing cell search time in cellular communications in accordance with example implementations described herein.

As illustrated, wireless communications system 200 may include device 205 and base station 210. Device 205 may be an example of device 105 of FIG. 1. Base station 210 may connect device 205 to a core network (e.g., a central, high-speed backbone of a telecommunications network, responsible for routing data and connecting different parts of the network). As shown, wireless communications system 200 may include downlink 215 and uplink 220. Base station 210 may use downlink 215 to convey control and/or data information to device 205. And device 205 may use uplink 220 to convey control and/or data information to base station 210. In some cases, downlink 215 may use different time and/or frequency resources than uplink 220. In some cases, base station 210 may be associated with a geographic coverage area in which communications with one or more UEs (e.g., device 205) is supported.

Device 205 may receive one or more transmissions from base station 210. In some cases, the one or more transmissions may include a configuration or an indication of a configuration for device 205. In some examples, the one or more transmissions may include a synchronization signal block (SSB), such as SSB 225. In some cases, SSB 225 may include a primary synchronization signal (PSS) to enable device 205 to find a cell's timing and frame boundary; a secondary synchronization signal (SSS) to provide additional synchronization information, including the cell ID to distinguish between different cells; and a physical broadcast channel (PBCH), which may carry the master information block (MIB), which may include system information for initial access, such as the system frame number and subcarrier spacing, etc.

When device 205 powers on, device 205 may initiate a cell search procedure to find an appropriate cell for connection. For example, device 205 may tune to a specific frequency and scan for potential cell carriers, detecting synchronization signals, and decoding system information, etc. Device 205 may use this information to select a cell and establish communication. In some cases, device 205 may search for and detect synchronization signals, such as PSS and SSS, which device 205 may use to acquire frequency and time synchronization with a given cell. The PSS and SSS can help device 205 to determine a physical cell identity (PCI) of the cell. Once device 205 has synchronization and PCI, device 205 may decode the PBCH. The PBCH can include the master information block (MIB), which device 205 may decode to extract key information about the cell, including configuration parameters. Device 205 may decode system information blocks (SIBs), which provide more detailed information about the cell. Based on the acquired information, device 205 may select a suitable cell for communication and follow an initial access procedure with the selected cell.

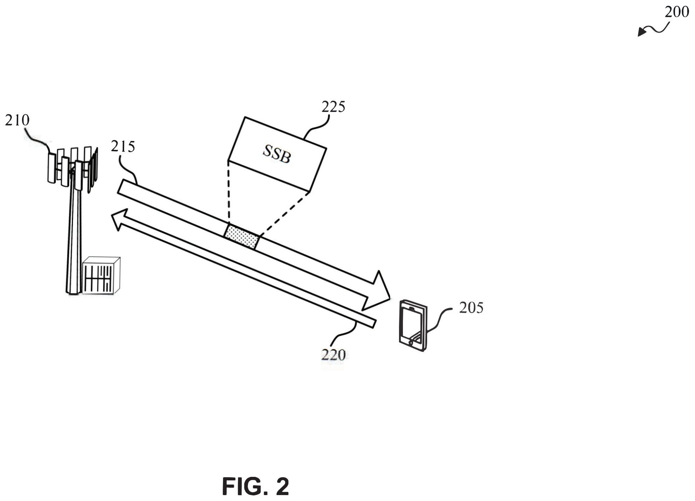

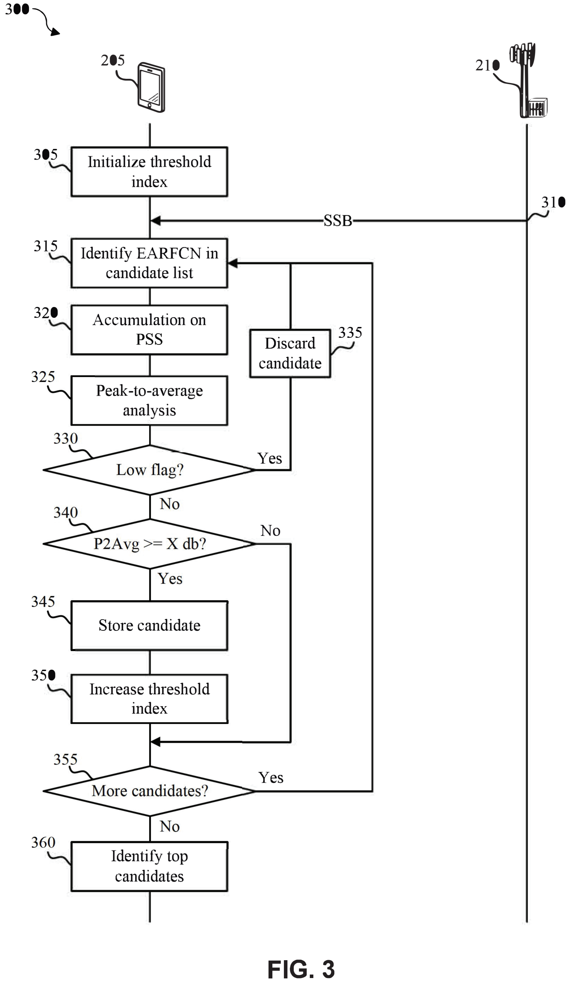

**FIG. 3** illustrates an example system flow 300 in accordance with one or more implementations as described herein. In some configurations, one or more aspects of system flow 300 may be implemented by or in conjunction with device 105 of FIG. 1, device 205 of FIG. 2, base station 210 of FIG. 2, or any combination thereof.

In a frequency band, there can be several EARFCNs. A UE may check all of the EARFCNs to find the best candidate that provides the best SNR. System flow 300 may include and/or may be based on aspects of early discard, which can include abandoning a currently checked EARFCN as soon as possible when it is detected as pure noise. In terms of total cell search time, early discard can significantly reduce the search time spent on many incorrect EARFCN, which can dominate the total cell search time. Early discard can be based on aspects of a frequency scan stage, where large savings in time can be achieved. For early discard, a dynamic threshold-based scheme may be implemented.

To design the thresholding algorithm, the cumulative distribution function (CDF) of the peak-to-average ratio of the X best NPSS candidates (e.g., X=12) may be utilized. The accumulation of PSS can be set to a relatively long number for reliability. In some cases, 16 PSS accumulations may be performed (e.g., L=16). Early discard may be based on a table of threshold values TH_TBL. For example, TH_TBL= [1.13 1.13 1.13 1.14 1.16 1.19 1.23 1.28 1.40 1.56 1.75 1.94 2.12 2.27 2.44]. With some systems, a UE may have a threshold of the peak-to-average that the UE uses to accept the current EARFCN. In some cases, 4 dB may be used for the minimum value required for reliable cell search operation. When the intermediate values do not meet the thresholds at a specific accumulation, it is fair to declare that the current EARFCN would not contain desired PSS. To increase the reliability of this decision, it is recommended to check *N* consecutive times during accumulations. The pseudocode for an early discard algorithm may be based on the following:

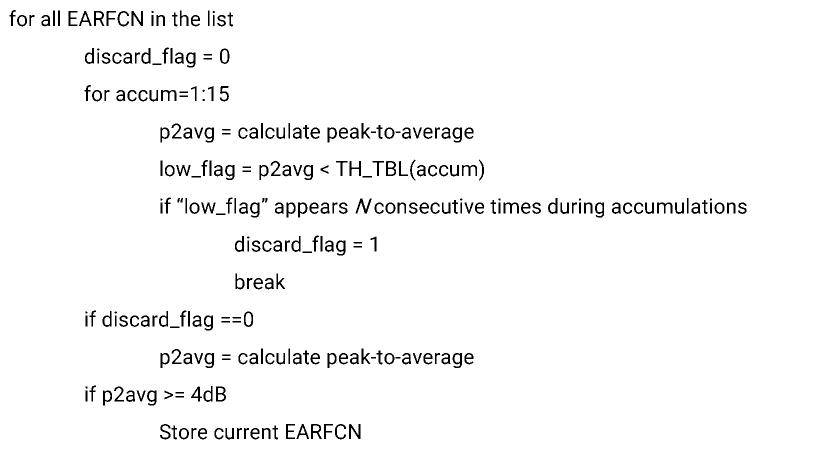

The algorithm above may use a fixed threshold vector for all SNR. The threshold may be determined to meet the minimum peak-to-average constraint, which can happen to be similar to the value at -15dB. However, at relatively high SNR, the peak-to-average may be higher allowing higher thresholds. However, at a current cell search stage, there may be no good SNR information yet. To address this issue, the following modifications may be implemented. In some cases, two additional threshold vectors may be defined as follows: $TH_TBL = \left[\begin{matrix}1.13 1.13 1.13 1.14 1.16 1.19 1.23 1.28 1.40 1.56 1.75 1.94 2.12 2.27 \\ 2.44 ; \\ 1.13 1.13 1.15 1.19 1.25 1.36 1.55 1.84 2.13 2.38 2.61 2.79 2.98 3.14 \\ 3.26 ; \\ 1.13 1.16 1.21 1.34 1.63 2.01 2.36 2.69 2.98 3.20 3.39 3.56 3.69 3.80 \\ 3.90\end{matrix}\right] .$

As shown, the first row of TH_TBL may be based on values used in the pseudocode above. The three rows may be associated with -15 dB, -14 dB, and -13dB at CDF 0.01, respectively. The peak-to-average at the 16th accumulation may be at or near 4, 5, and 6dB, for each row (e.g., respectively). In some cases, the following second pseudocode may be used for early discard (e.g., based on a lack of estimated SNR information):

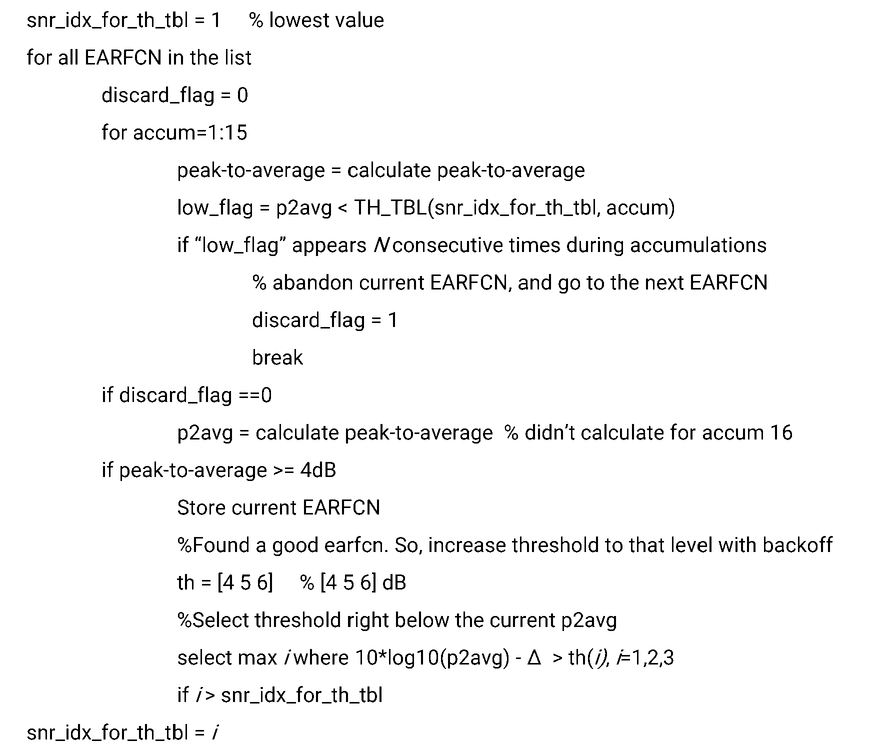

The value Δ (e.g., back-off value for optimization), may be in dB. The back-off value may be used to conservatively increase threshold to minimize the miss event. The second pseudocode can increase the overall thresholds to a currently detected "peak-to-average level - Δ dB," which can be a relatively greedy approach because a good EARFCN is already found and cell search block would not be interested in anything below.

At 305, device 205 may initialize a threshold index (e.g., threshold index = 1). In some cases, the threshold index may be associated with an early discard mechanism described herein, which may include or may be based on discarding a candidate before completing the analysis of the candidate (e.g., before all PSS accumulations are tested for this candidate). In some examples, device 205 may select one or more thresholds associated with early discard, including the threshold index, based on a list of available thresholds (e.g., default threshold values), based on network measurements, based on device 205 being preconfigured with threshold values, based on a configuration message received from base station 210, or any combination thereof.

At 310, base station 210 may transmit an SSB to device 205. The SSB may include a PSS, SSS, PBCH, etc. In some cases, base station 210 may periodically transmit an SSB to device 205.

At 315, device 205 may identify EARFCN (e.g., carrier frequencies) in a candidate list. In some examples, the EARFCN candidate list may come from the network (e.g., base station 210). In some cases, the candidate list of frequencies may be based on device 205 performing periodic cell measurements of available cells, device 205 receiving a system information block with information about available cells, device 205 being preconfigured with a set of target cells, etc.

At 320, device 205 may perform one or more accumulations based on PSS that device 205 receives from base station 210. For a given EARFCN candidate (e.g., for each EARFCN candidate) device 205 may perform a number of accumulation iterations. For example, device 205 may perform a for loop for L accumulations (e.g., for 1:L accumulations of a given EARFCN candidate). When device 205 turns on, device 205 may enter a cell search stage, performing correlations in PSS for all possible EARFCN. In some examples, device 205 may have a number of frequency candidates (e.g., 1,000 EARFCN). Device 205 may determine some number of best candidates after visiting all 1,000 frequencies (e.g., 5 best frequencies from the 1,000 candidate frequencies). EARFCN can identify a specific radio channel (e.g., carrier frequency) used for communication between device 205 and a given cell in a wireless network (e.g., base station 210). Each EARFCN can correspond to a specific carrier frequency (e.g., F1, F2, F3, etc.). In some cases, device 205 may perform PSS accumulations (e.g., multiple accumulation iterations of 1,000 frequencies) to determine best candidates of the 1,000 candidates. An accumulation may include device 205 accumulating all PSS values for a given accumulation iteration. In some cases, device 205 may add element-wise values from a current accumulation to a previous accumulation to generate a new accumulation (e.g., add a first element of the first accumulation to a first element of the second accumulation; add a second element of the first accumulation to a second element of the second accumulation; and so on). It is noted that peak-to-average values may increase from accumulation to accumulation when the candidate is the correct frequency, while incorrect cells do not increase in value with accumulations regardless of how many accumulations are performed.

At 325, device 205 may perform peak-to-average analysis (e.g., analysis of peak signal energy to average signal energy) based on a given accumulation. For example, device 205 may perform a first peak-to-average analysis for a first accumulation, perform a second peak-to-average analysis for a second accumulation, and so on. In some cases, device 205 may calculate the peak-to-average ratio for a given set of PSS values (e.g., [maximum value of the PSS values] / [avg(all PSS values)]) for a given accumulation.

At 330, device 205 may determine whether a low flag appears N times, where N may be a positive integer (e.g., N=2, N=3, N=4, N=5, etc.). If low flag appears N consecutive times during accumulations, then device 205 may stop accumulation for that candidate (e.g., current candidate is discarded). Device 205 may discard the candidate even if all accumulations are not performed (e.g., early discard, discarded early or before all accumulations are tested for this candidate). In some cases, the low flag may be set to true (e.g., low flag = logical 1) when the peak-to-average of a given accumulation is less than a value of a peak-to-average table determined based on the threshold index and the given accumulation (e.g., low flag = peak-to-average < TH_TBL(threshold_index, accum)). N consecutive unsatisfactory accumulation results can signify that a majority of the PSS values are relatively low, that there is no relatively high value among the PSS values for each of the N accumulations, indicating a poor candidate. If a candidate frequency is the correct frequency, at least one PSS value should be relatively high, providing a relatively high peak-to-average. But if the peak-to-average is relatively low (e.g., peak-to-average < TH_TBL), then this indicates there is not sufficiently strong value among the PSS values.

At 335, when the low flag appears N times, the current candidate may be discarded (e.g., early discard). As shown, system flow 300 may return to 315 to identify a next EARFCN candidate from the candidate list. Device 205 may then analyze this next candidate, as indicated herein.

At 340, when the low flag does not appear N times for a given candidate, device 205 may determines whether the peak-to-average of this candidate is greater than or equal to a minimum peak-to-average threshold (e.g., minimum accepted peak-to-average; is peak-to-average >= X dB?). When the given candidate is not greater than or equal to the minimum peak-to-average threshold, device 205 may determine whether additional candidates are available. As shown, system flow 300 may return to 315 to identify a next EARFCN candidate from the candidate list. Device 205 may then analyze this next candidate, as indicated herein.

At 345, when device 205 determines the peak-to-average of a given candidate is greater than or equal to the minimum peak-to-average threshold, device 205 may store this candidate. In some examples, testing may reach some frequency (e.g., tenth frequency candidate F10) from the EARFCH candidate list. For a given accumulation iteration of F10, one of the PSS values (e.g., of 1,000 CID values) may be relatively high compared to all the other PSS values (e.g., PSS(300) highest among PSS values PSS(1) to PSS(1000)). Because F10 includes a relatively high PSS value, the low flag does not appear (e.g., or at least does not appear N consecutive times). Accordingly, L accumulation iterations of PSS values for F10 may be accumulated (e.g., perform accumulation L times for F10). With each accumulation iteration, the peak-to-average value for F10 may improve or increase, as the relatively high PSS value is accumulated each iteration, resulting in F10 being stored.

At 350, device 205 may increase the threshold index. In some cases, device 205 may determine the peak-to-average of a candidate that is stored and increase the minimum peak-to-average threshold to be at or relatively near (e.g., just below) the peak-to-average of this candidate. In some cases, device 205 may increase the threshold index based on the following equation: $select max i where 10 * log 10 \left(peak-to-average\right) - Δ > peak - to _ average_dB \left(i\right) , i = 1 , 2 , 3$

In some cases, device 205 may determine whether *i* > threshold_index, and if so, then set threshold_index = *i*. In some examples, peak-to-average of a candidate may be 5.5 dB and Δ may be set to some value (e.g., 0.1, 0.2, 0.3, etc.). The linear value of 5.5 dB is 3.55. Accordingly, 10*log10(3.55) - Δ = 5.5 - 0.1 = 5.4 dB (e.g., just below the peak-to-average of this candidate). If the value *i* is higher than the current threshold_index and TH_TBL(*i*) < 5.4dB is true, then the threshold_index may be set to *i.* If multiple values of *i* exist, then the maximum value of *i* is used. Accordingly, when device 205 stores a candidate, device 205 may raise the bar for subsequent candidate frequencies, storing only those candidates that have a signal strength that is at least as strong as the candidates already stored.

It is noted that the threshold TH_TBL may increase as the threshold index is increased. In some cases, TH_TBL may include a set of threshold values. For example, TH_TBL may include L threshold values for L accumulations. For instances, TH_TBL = [0.1 0.2 0.3 ...] for threshold_index of 1. For threshold_index = 2, there is a higher (e.g., slightly higher) threshold value (e.g., [0.19, 0.25, 0.39, 0.45, ...]). For threshold_index = 3, there is a higher (e.g., slightly higher) threshold value (e.g., [0.26, 0.31, 0.47, 0.52, ...]). The first set of values in TH_TBL for threshold_index = 1 may be calculated based on a 4 dB from peak-to_average_dB threshold. The second set of values in TH_TBL for threshold_index = 2 may be based on a 5 dB from peak-to_average_dB threshold. The third set of values in TH_TBL for threshold_index = 3 may be based on a 6 dB from peak-to_average_dB threshold. If the peak-to-average value of a given iteration is higher than 6 dB, then the threshold_index jumps to i=3 regardless of whether i=1 or i=2 has been iterated. In such a case, a subsequent candidate frequency is likely to be discarded because the higher threshold is likely to trigger to N consecutive low flags.

At 355, device 205 may determine whether an additional candidate remains to be tested. If so, system flow 300 may return to 315. If device 205 determines no additional candidates remain, then device 205 may identify the top candidates (e.g., all candidates stored at iterations of 345).

At 360, device 205 may identify the top candidates. In some cases, device 205 may select the candidates that are stored at 345. In some cases, device 205 may select the top candidates among the candidates stored at 345. For example, device 205 may select some predetermined number of top M candidates, where M is a positive integer (e.g., M=2, M=3, M=4, M=5, etc.) among the candidates stored at 345. For example, device 205 may determine the signal strength of each candidate stored at 205 and select the M candidates that have the highest signal strength among all stored candidates.

Accordingly, starting with a first candidate (e.g., F1), a relatively low threshold may be used. If device 205 finds a good cell, device 205 increases the threshold. The increased threshold is used for subsequent candidates. The increased threshold is likely to result in subsequent frequencies being discarded. If the correct frequency is F1, then the other frequencies are quickly removed. And when the correct frequency is found with F1 (or a relatively low frequency), the total time is reduced significantly. For example, if N = 3, then each subsequent candidate after finding the correct frequency will be accumulated a maximum of 3 times instead of L=16 times, for savings greater than 80%. If N = 4, then each subsequent candidate will be accumulated a maximum of 4 times instead of L=16 times, for savings greater than 75%. Even though there are multiple candidates, device 205 may be assigned the most probable frequencies, and so device 205 is likely to find the correct frequency relatively quickly based on the systems and methods described herein.

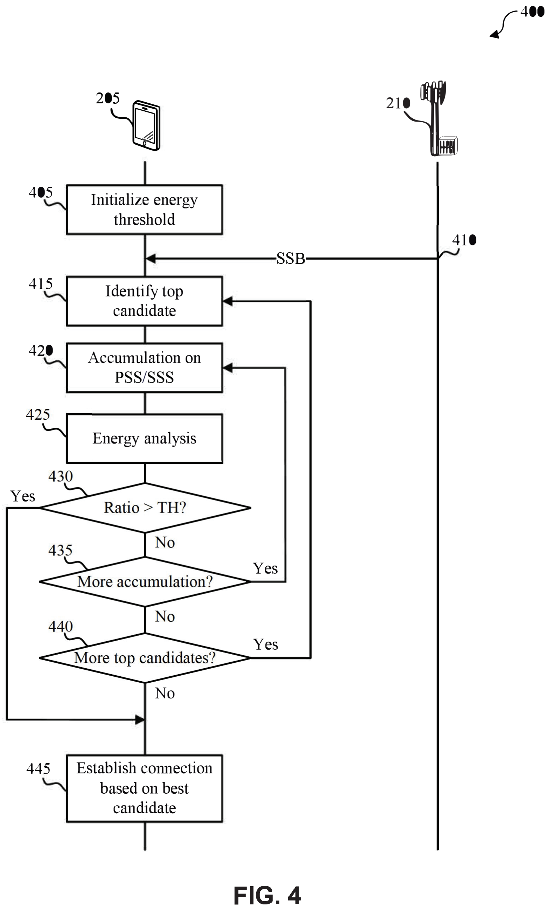

**FIG. 4** illustrates an example system flow 400 in accordance with one or more implementations as described herein. In some configurations, one or more aspects of system flow 400 may be implemented by or in conjunction with device 105 of FIG. 1, device 205 of FIG. 2, base station 210 of FIG. 2, or any combination thereof.

The systems and methods described herein may include and/or may be based on early termination. For example, the systems and methods described may accumulate sync signals (PSS/SSS) to test signal quality. These stages can use a relatively low miss rate (i.e., good candidates are lost due to incorrect decision), therefore a long accumulation of sync signal may be used with some systems. However, if the current detection results are already accurate enough, there is no need to keep accumulating more signals. Accordingly, the systems and methods described herein may implement early termination to prevent unnecessary further accumulations when the current metric is already good enough. In some cases, early termination may be based on an energy ratio between the best and the 2nd best candidate. Other metrics may be used for early termination. Energy may be used because energy does not require signal-to-noise ratio (SNR) information, and can be robust even with gain variation. In some cases, early termination may can be done separately for PSS and SSS, or for narrowband PSS (NPSS) and narrowband SSS (NSSS) using optionally different thresholds.

The best candidate may be the candidate with the best overall energy. However, for the 2^{nd} best candidate, one or more criterion may be considered. Due to oversampling and the possibility of the exact boundary being in the middle of two consecutive time-domain samples, the adjacent location (either left or right) of the best energy can have significant energy. Measured values may be sorted using the correlation energy values.

In the following example, the detected two best NPSS locations 261 and 260 are adjacent to each other, each showing a relatively high correlation energy:

| | | | | | | |
|---|---|---|---|---|---|---|
| --------- NPSS Searcher All FINAL result [1] ( 0/ 1) --------- | | | | | | |
| >> NPSS Result fo: | 0KHz Sbfrm: 5 pPos: | ***261*** corr: | 10085 afc: | -97 | -26 | -6.42 |
| >> NPSS Result fo: | 0KHz Sbfrm: 5 pPos: | ***260*** corr: | 9965 afc: | -98 | -19 | -6.58 |
| >> NPSS Result fo: | 0KHz Sbfrm: 5 pPos: | 259 corr: | 6850 afc: | -81 | -17 | -6.54 |
| >> NPSS Result fo: | 0KHz Sbfrm: 5 pPos: | 415 corr: | 3528 afc: | 42 | 42 | 1.75 |
| >> NPSS Result fo: | 0KHz Sbfrm: 2 pPos: | 50 corr: | 3394 afc: | 37 | -45 | -1.97 |
| >> NPSS Result fo: | 0KHz Sbfrm: 6 pPos: | 20 corr: | 2825 afc: | 53 | 4 | 0.17 |

Using the above results, an example of NSSS detection results are depicted below. The correct cell ID (CID) 2 and the 80ms boundary (BND) may be detected using both NPSS locations.

| | | | |
|---|---|---|---|
| --------- NSSS NonCoh Searcher FINAL All result [1] ( 0/ 1) --------- | | | |
| **>> *NSSS: CID:*** | ***2 BND: 1 sPos:*** | ***9381 CorrVal:*** | ***19962 ( - 141 -9) PSSPath: 1 PWR:3515445*** |
| **>> *NSSS: CID:*** | ***2 BND: 1 sPos:*** | ***9380 CorrVal:*** | ***5945 ( -76 -13) PSSPath: 3 PWR:3465309*** |
| >> NSSS: CID: | 4 BND: 3 sPos: | 9380 CorrVal: | 4657 ( -56 39) PSSPath: 3 PWR:3465309 |
| >> NSSS: CID: | 326 BND: 0 sPos: | 9380 CorrVal: | 3524 ( 50 32) PSSPath: 3 PWR:3465309 |
| >> NSSS: CID: | 319 BND: 2 sPos: | 4580 CorrVal: | 3380 ( 38 44) PSSPath: 2 PWR:1604519 |

When the detected two best NPSS locations may be adjacent to each other, the PSS energy ratio between the first two may be relatively small (e.g., 10085/9965=1.04) when the 2^{nd} best candidate (e.g., absolute 2^{nd} best candidate) is selected without any further criteria. In such cases, the 2nd best candidate can indicate the same NSSS detection results, which may not be desirable for early termination. In some cases, the best and 2^{nd} best ratio metric may be used to determine whether the currently chosen candidate is correct or not. In some cases, the 2^{nd} best PSS candidate may be configured to be at least two samples apart from the best candidate to improve early termination.

In some cases, the candidate quality (e.g., best to 2^{nd} best ratio) of current correlation results may be checked to determine whether a mobile device should continue the correlation. For example, after every subframe (SF) calculation, the ratio between the best and the 2^{nd} best energy may be compared based on the following pseudocode:

```
       sort energy.
       if (best energy) / (2nd best energy) > TH
              stop accumulation, and go to either NSSS detection or MIB decoding
       else
              continue one more SF accumulation
```

Accordingly, the decision metric for early termination may be based on the ratio of "energy at the 1st best location / energy at the 2^{nd} best location" after removing adjacent candidates. This ratio may be tested at one or more SNRs and different accumulation lengths. Multiple number of PSS candidates may be used for SSS detection to overcome the effect of noise. In some examples, some number (e.g., 3, 4, 5) of the best PSS candidates may be used for SSS detection.

In some cases, the pseudocode can be applied to NSSS to determine early termination. For NSSS, the threshold value may be modified. and the definition of "2^{nd} best candidate" may be defined as the 2^{nd} best candidate with a cell ID different from the cell ID of the best candidate and/or the candidate with a different 80ms boundary compared to the best candidate.

At 405, device 205 may initialize an energy threshold. In some cases, the energy threshold may be associated with an early termination mechanism described herein, which may include or may be based on terminating accumulations of a candidate before completing analysis of the candidate (e.g., before all SSS accumulations are tested for this top candidate). In some examples, device 205 may select the energy threshold from a list of one or more possible energy thresholds (e.g., default energy threshold, variations of the default energy threshold), based on network measurements by device 205, based on device 205 being preconfigured with one or more threshold values, based on a configuration message that device 205 receives from base station 210, or any combination thereof.

At 410, base station 210 may transmit an SSB to device 205. The SSB may include a PSS, SSS, PBCH, etc. In some cases, base station 210 may periodically transmit an SSB to device 205.

At 415, device 205 may identify a top candidate from a list of top candidates (e.g., top candidates stored at iterations of 345 of system flow 300). In some examples, device 205 may determine a number of best candidates after visiting some number of candidate frequencies (e.g., determines 5 best frequencies based on visiting 1,000 candidate frequencies). This correlation may occur in detecting PSS, which may be associated with system flow 300. For the 5 best frequencies, device 205 may perform another for loop for each of the 5 best frequencies based on device 205 detecting SSS. By detecting SSS, device 205 conforms on one best frequency. With SSS detection, device 205 may execute a for loop for accumulation (e.g., 1 to M accumulations for the 5 best frequencies determined from PSS, where M may be less than, equal to, or greater than L from system flow 300). Device 205 may accumulate a first SSS for the first frequency, and if the correlation satisfies a given threshold (e.g., if (best energy) / (2nd best energy) > TH), then device 205 may stop accumulations (e.g., further accumulations may be aborted). If the correlation does not satisfy the threshold, then device 205 may accumulate a second SSS, and so on.

At 420, device 205 may accumulate PSS and/or SSS from base station 210 (e.g., based on SSB at 410). A PSS and/or SSS correlation may return some number of values (e.g., returns 1,000 values) for each possible cell ID, which may be accumulated iteratively by device 205.

At 425, device 205 may perform energy analysis. For example, device 205 may perform energy analysis based on an accumulation of SSS at 420. Based on system flow 400, device 205 may sort energy associated with the number of values associated with an accumulation. In some examples, device 205 may analyze the number of values to determine a best energy and a 2nd best energy among the returned values. The energy may be based on a reference signal received power (RSRP), such as synchronization signal RSRP (SS-RSRP).

In some cases, device 205 may select the 2^{nd} best energy based on one or more criterion. For example, the candidate with the 2^{nd} best energy (e.g., 2^{nd} best PSS candidate) may be selected from the PSS candidate with the next best set of energy levels that are also at least 2 samples apart from the candidate with the best energy levels. Also, for SSS, the 2nd best candidate may be the candidate with the 2^{nd} highest energy levels that (a) has a cell ID different from the candidate with the highest energy levels; and/or (b) has a 80ms boundary different from the 80ms boundary of the candidate with the highest energy levels (e.g., when 80ms information is carried by SSS and/or NSSS). When a candidate with the absolute 2^{nd} highest energy levels does not meet the given constraints, device 205 may check whether the candidate with the 3^{rd} highest energy levels or 4^{th} highest energy levels, etc., satisfies the constraints. Accordingly, the PSS candidate with the absolute 3^{rd} highest energy levels may be selected as the PSS candidate with the "2^{nd} highest energy levels" based on the PSS candidate with the absolute 3^{rd} highest energy levels being at least 2 samples apart from the PSS candidate with the best energy levels. Similarly, the SSS candidate with the absolute 4^{th} highest energy levels, for example, may be selected as the SSS candidate with the "2^{nd} highest energy levels" based on the SSS candidate with the absolute 4^{th} highest energy levels having a different cell ID and/or a different 80ms boundary relative to the SSS candidate with the highest energy levels.

At 430, device 205 may determine whether a ratio of the best energy and 2^{nd} best energy satisfies an energy threshold. In some examples, device 205 may determine the best energy is 500 and the 2nd best energy is 490. If the ratio of best energy to 2^{nd} best energy is relatively high (e.g., [best energy] / [2^{nd} best energy] > energy threshold), then this can indicate a relatively stable synchronization between the received signal and a locally generated assumption of device 205. In some cases, device 205 may apply a first locally generated assumption for a first cell ID and apply a second locally generated assumption for a second cell ID (e.g., to 1,000 different cell IDs). Accordingly, the higher the ratio of best energy to 2nd best energy, the higher the reliability of the SSS correlation result.

In some examples, device 205 may configure the energy threshold for early termination. It is noted that the energy threshold may be determined based on simulation, etc. In some cases, the energy threshold may be set to a relatively high number to ensure the best signal is selected for device 205 and to avoid exiting the SSS accumulation prematurely. When the ratio of (best energy) / (2nd best energy) is less than the energy threshold (e.g., less than or equal to the energy threshold), then device 205 may continue to test a next accumulation.

At 435, device 205 may determine whether additional accumulations are pending. For example, for a given candidate, device 205 may be configured to perform M accumulations. Accordingly, device 205 may determine whether M accumulations have been performed for a given candidate. When device 205 determines additional accumulations are pending (e.g., less than M accumulations have been performed), device 205 may return to 420 to test another accumulation (e.g., based on another SSS received from base station 210).

At 440, when device 205 determines additional accumulations are not pending (e.g., M accumulations have been performed for current candidate), device 205 may determine whether additional top candidates remain to be tested. When device 205 determines additional top candidates remain to be tested, device 205 may return to 415 to select a next candidate from the list of top candidates.

At 445, when device 205 determines no additional top candidates remain to be tested (e.g., all top candidates have been tested), device 205 may establish a connection with a cell (e.g., of base station 210) based on device 205 identifying a best candidate from the list of top candidates.

In some examples, when the ratio of (best energy) / (2nd best energy) is greater than the energy threshold, then device 205 may select the candidate associated with these energy levels and perform PSS detection and SSS detection, which may include master information block (MIB) decoding. For example, device 205 may perform a decoding step, decoding a signal of a cell to create a connection between device 205 and that cell. MIB decoding may be associated with PSS detection and SSS detection. The PSS and SSS may be used to determine a cell ID, which device 205 may use to decode the physical broadcast channel (PBCH) that carries the MIB. Based on decoding the PBCH, device 205 may decode the MIB. Based on decoding the MIB, device 205 may determine system bandwidth, control channel configurations, system frame number, etc., which device 205 may use to decode system information and establish a connection with a base station.

Accordingly, device 205 may perform early discard in conjunction with PSS accumulations based on some number of candidates (e.g., based on 1,000 candidates). Device 205 may identify some number of the best frequencies (e.g., 5 best candidate carrier frequencies) based on early discard and PSS accumulation. In some cases, device 205 may perform early termination in conjunction with SSS accumulation. For example, device 205 may perform early termination based on the number of the best frequencies (e.g., 5 best frequencies) determined by device 205 in early discard. Energy values in accumulations may increase when the candidate is the correct frequency, while incorrect cells do not increase in value with accumulations regardless of how many accumulations are performed. Accordingly, SSS accumulations increase the best and 2^{nd} best energy levels, enabling device 205 to select the correct candidate relatively quickly.

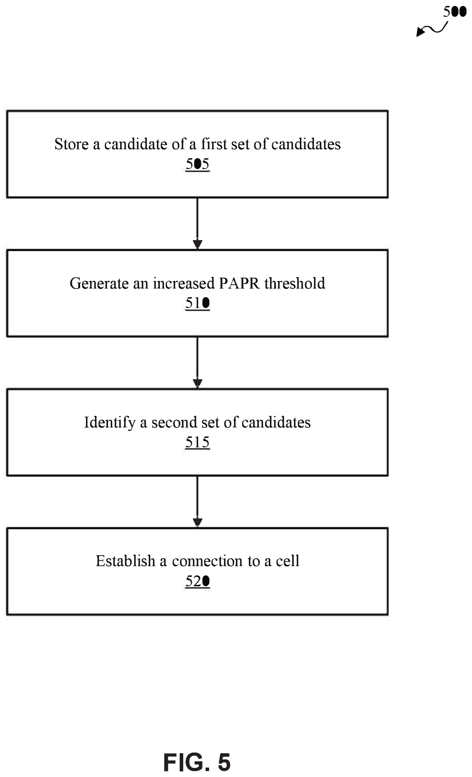

**FIG. 5** depicts a flow diagram illustrating an example method 500 associated with the disclosed systems, in accordance with example implementations described herein. In some configurations, one or more aspects of method 500 may be implemented by or in conjunction with device 105 of FIG. 1, device 205 of FIG. 2, base station 210 of FIG. 2, or any combination thereof. The depicted method 500 is just one implementation and one or more operations of method 500 may be rearranged, reordered, omitted, and/or otherwise modified such that other implementations are possible and contemplated.

At 505, method 500 may include storing a candidate of a first set of candidates. For example, device 205 may store a candidate of a first set of candidates based on respective power ratios of two or more accumulations of the candidate satisfying a power ratio threshold. In some cases, device 205 may store the candidate based on the power ratio of the candidate satisfying a minimum power ratio threshold.

In some cases, the power ratio may be based on a peak power ratio. For example, the power ratio may be based on a peak-to-average power ratio (PAPR), a peak-to-minimum ratio, a peak-to-second peak ratio, etc. Similarly, the power ratio threshold and/or minimum power ratio threshold may be based on a PAPR threshold, a peak-to-minimum ratio threshold, a peak-to-second peak ratio threshold, etc.

At 510, method 500 may include generating an increased power ratio threshold. For example, device 205 may generate an increased power ratio threshold based on the respective power ratios of the two or more accumulations of the candidate satisfying the minimum power ratio threshold, the increased power ratio threshold being greater than the power ratio threshold.

At 515, method 500 may include identifying a second set of candidates. For example, device 205 may identify a second set of candidates that is a subset of the first set of candidates, the second set of candidates, including the candidate stored at 505.

At 520, method 500 may include establishing a connection to a cell. For example, device 205 may establish a connection to a cell based on the candidate stored at 505.

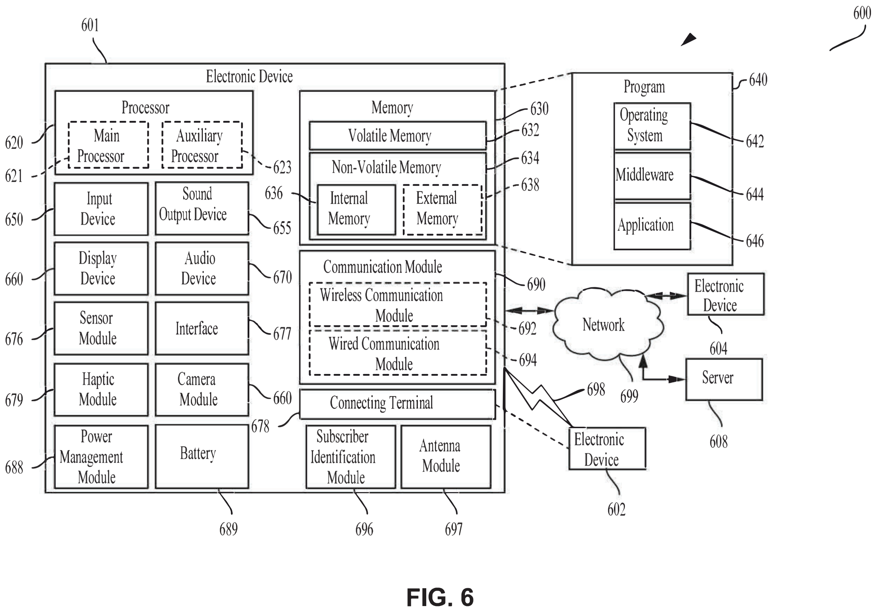

**FIG. 6** depicts a block diagram of an electronic device in a network environment 600, according to an embodiment.

Referring to FIG. 6, an electronic device 601 in a network environment 600 may communicate with an electronic device 602 via a first network 698 (e.g., a short-range wireless communication network), or an electronic device 604 or a server 608 via a second network 699 (e.g., a long-range wireless communication network). The electronic device 601 may communicate with the electronic device 604 via the server 608. The electronic device 601 may include a processor 620, a memory 630, an input device 650, a sound output device 655, a display device 660, an audio module 670, a sensor module 676, an interface 677, a haptic module 679, a camera module 680, a power management module 688, a battery 689, a communication module 690, a subscriber identification module (SIM) card 696, or an antenna module 697. In one embodiment, at least one (e.g., the display device 660 or the camera module 680) of the components may be omitted from the electronic device 601, or one or more other components may be added to the electronic device 601. Some of the components may be implemented as a single integrated circuit (IC). For example, the sensor module 676 (e.g., a fingerprint sensor, an iris sensor, or an illuminance sensor) may be embedded in the display device 660 (e.g., a display).

The processor 620 may execute software (e.g., a program 640) to control at least one other component (e.g., a hardware or a software component) of the electronic device 601 coupled with the processor 620 and may perform various data processing or computations.

As at least part of the data processing or computations, the processor 620 may load a command or data received from another component (e.g., the sensor module 676 or the communication module 690) in volatile memory 632, process the command or the data stored in the volatile memory 632, and store resulting data in non-volatile memory 634. The processor 620 may include a main processor 621 (e.g., a central processing unit (CPU) or an application processor (AP)), and an auxiliary processor 623 (e.g., a graphics processing unit (GPU), an image signal processor (ISP), a sensor hub processor, or a communication processor (CP)) that is operable independently from, or in conjunction with, the main processor 621. Additionally or alternatively, the auxiliary processor 623 may be adapted to consume less power than the main processor 621, or execute a particular function. The auxiliary processor 623 may be implemented as being separate from, or a part of, the main processor 621.

The auxiliary processor 623 may control at least some of the functions or states related to at least one component (e.g., the display device 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). The auxiliary processor 623 (e.g., an image signal processor or a communication processor) may be implemented as part of another component (e.g., the camera module 680 or the communication module 690) functionally related to the auxiliary processor 623.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634. Non-volatile memory 634 may include internal memory 636 and/or external memory 638.

The program 640 may be stored in the memory 630 as software, and may include, for example, an operating system (OS) 642, middleware 644, or an application 646.

The input device 650 may receive a command or data to be used by another component (e.g., the processor 620) of the electronic device 601, from the outside (e.g., a user) of the electronic device 601. The input device 650 may include, for example, a microphone, a mouse, or a keyboard.

The sound output device 655 may output sound signals to the outside of the electronic device 601. The sound output device 655 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 660 may visually provide information to the outside (e.g., a user) of the electronic device 601. The display device 660 may include, for example, a display, a hologram device, or a projector and control circuitry to control a corresponding one of the display, hologram device, and projector. The display device 660 may include touch circuitry adapted to detect a touch, or sensor circuitry (e.g., a pressure sensor) adapted to measure the intensity of force incurred by the touch.

The audio module 670 may convert a sound into an electrical signal and vice versa. The audio module 670 may obtain the sound via the input device 650 or output the sound via the sound output device 655 or a headphone of an external electronic device 602 directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. The sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device 602 directly (e.g., wired) or wirelessly. The interface 677 may include, for example, a high- definition multimedia interface (HDMI), a universal serial bus (USB) interface, a secure digital (SD) card interface, or an audio interface.

A connecting terminal 678 may include a connector via which the electronic device 601 may be physically connected with the external electronic device 602. The connecting terminal 678 may include, for example, an HDMI connector, a USB connector, an SD card connector, or an audio connector (e.g., a headphone connector).

The haptic module 679 may convert an electrical signal into a mechanical stimulus (e.g., a vibration or a movement) or an electrical stimulus which may be recognized by a user via tactile sensation or kinesthetic sensation. The haptic module 679 may include, for example, a motor, a piezoelectric element, or an electrical stimulator.

The camera module 680 may capture a still image or moving images. The camera module 680 may include one or more lenses, image sensors, image signal processors, or flashes. The power management module 688 may manage power supplied to the electronic device 601. The power management module 688 may be implemented as at least part of, for example, a power management integrated circuit (PMIC).

The battery 689 may supply power to at least one component of the electronic device 601. The battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the AP) and supports a direct (e.g., wired) communication or a wireless communication. The communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BLUETOOTHTM, wireless-fidelity (Wi-Fi) direct, or a standard of the Infrared Data Association (IrDA)) or the second network 699 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 692 may identify and authenticate the electronic device 601 in a communication network, such as the first network 698 or the second network 699, using subscriber information (e.g., international mobile subscriber identity (IMSI)) stored in the SIM card 696.

The antenna module 697 may transmit or receive a signal or power to or from the outside (e.g., the external electronic device) of the electronic device 601. The antenna module 697 may include one or more antennas, and, therefrom, at least one antenna appropriate for a communication scheme used in the communication network, such as the first network 698 or the second network 699, may be selected, for example, by the communication module 690 (e.g., the wireless communication module 692). The signal or the power may then be transmitted or received between the communication module 690 and the external electronic device via the selected at least one antenna.

Commands or data may be transmitted or received between the electronic device 601 and the external electronic device 604 via the server 608 coupled with the second network 699. Each of the electronic devices 602 and 604 may be a device of a same type as, or a different type, from the electronic device 601. All or some of the operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 601. The electronic device 601 may provide the outcome, with or without further processing of the outcome, as at least part of a reply to the request. To that end, a cloud computing, distributed computing, or client-server computing technology may be used, for example.

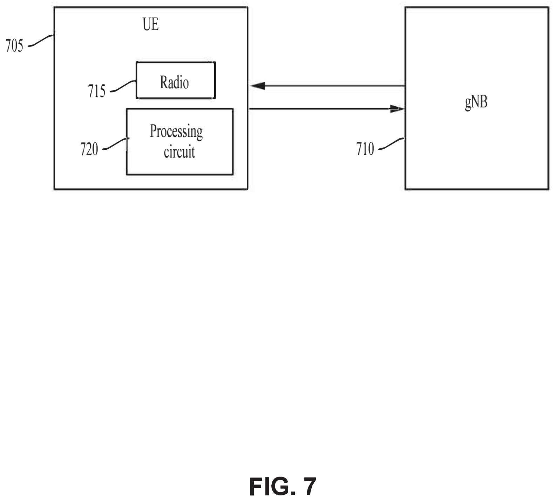

**FIG. 7** shows a system including a UE 705 and a gNB 710, in communication with each other. The UE may include a radio 715 and a processing circuit (or a means for processing) 720, which may perform various methods disclosed herein, e.g., the method illustrated in FIG. 1. For example, the processing circuit 720 may receive, via the radio 715, transmissions from the network node (gNB) 710, and the processing circuit 720 may transmit, via the radio 715, signals to the gNB 710.

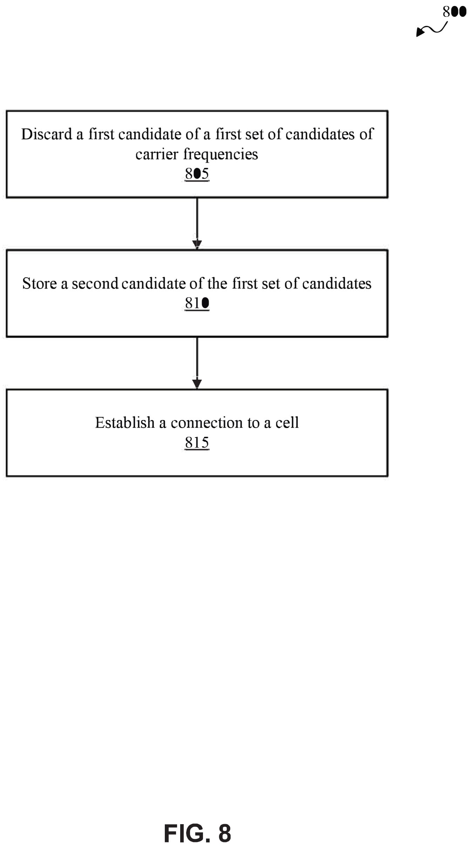

**FIG. 8** depicts a flow diagram illustrating an example method 800 associated with the disclosed systems, in accordance with example implementations described herein. In some configurations, one or more aspects of method 800 may be implemented by or in conjunction with device 105 of FIG. 1, device 205 of FIG. 2, base station 210 of FIG. 2, or any combination thereof. The depicted method 800 is just one implementation and one or more operations of method 800 may be rearranged, reordered, omitted, and/or otherwise modified such that other implementations are possible and contemplated.

At 805, method 800 may include discarding a first candidate of a first set of candidates of carrier frequencies. For example, device 205 may discard a first candidate of a first set of candidates of carrier frequencies based on at least a power ratio of a first accumulation of the first candidate and the power ratio of a second accumulation of the first candidate failing to satisfy a power ratio threshold.

At 810, method 800 may include storing a second candidate of the first set of candidates. For example, device 205 may store a second candidate of the first set of candidates based on respective power ratios of two or more accumulations of the second candidate satisfying the power ratio threshold and satisfying a minimum power ratio threshold.

At 815, method 800 may include establishing a connection to a cell. For example, device 205 may establish a connection to a cell based on the second candidate.

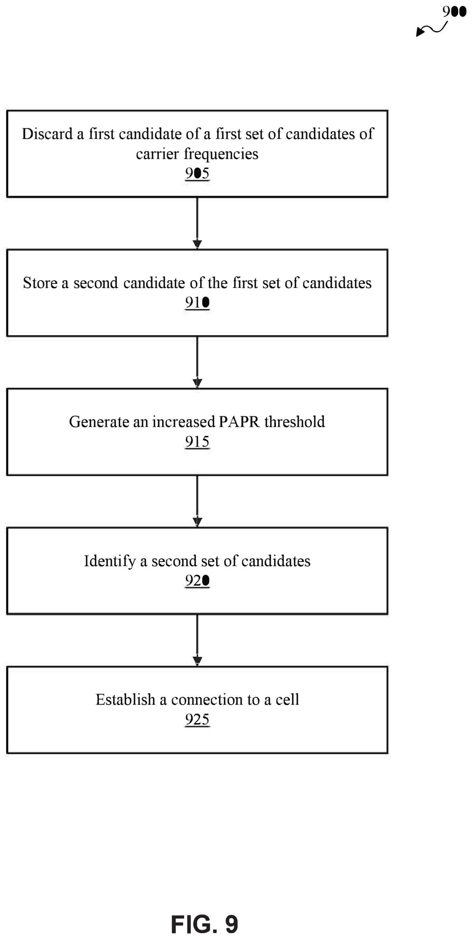

**FIG. 9** depicts a flow diagram illustrating an example method 900 associated with the disclosed systems, in accordance with example implementations described herein. In some configurations, one or more aspects of method 900 may be implemented by or in conjunction with device 105 of FIG. 1, device 205 of FIG. 2, base station 210 of FIG. 2, or any combination thereof. The depicted method 900 is just one implementation and one or more operations of method 900 may be rearranged, reordered, omitted, and/or otherwise modified such that other implementations are possible and contemplated.

At 905, method 900 may include discarding a first candidate of a first set of candidates of carrier frequencies. For example, device 205 may discard a first candidate of a first set of candidates of carrier frequencies based on at least a power ratio of a first accumulation of the first candidate and the power ratio of a second accumulation of the first candidate failing to satisfy a power ratio threshold.

At 910, method 900 may include storing a second candidate of the first set of candidates. For example, device 205 may store a second candidate of the first set of candidates based on respective power ratios of two or more accumulations of the second candidate satisfying the power ratio threshold and satisfying a minimum power ratio threshold.

At 915, method 900 may include generating an increased power ratio threshold. For example, device 205 may generate an increased power ratio threshold based on the respective power ratios of the two or more accumulations of the second candidate satisfying the minimum power ratio threshold, the increased power ratio threshold being greater than the power ratio threshold.

At 920, method 900 may include identifying a second set of candidates. For example, device 205 may identify, based on storing one or more candidates, a second set of candidates that is a subset of the first set of candidates, the second set of candidates, including the second candidate.

At 925, method 900 may include establishing a connection to a cell. For example, device 205 may establish a connection to a cell based on the second candidate.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method of cell search, the method comprising:
discarding (805, 905), at a user equipment, UE (105, 205, 705), a first candidate of a first set of candidates of carrier frequencies based on at least a power ratio of a first accumulation of the first candidate and a power ratio of a second accumulation of the first candidate failing to satisfy a power ratio threshold;
storing (810, 910), at the UE (105, 205, 705), a second candidate of the first set of candidates based on respective power ratios of two or more accumulations of the second candidate satisfying the power ratio threshold and satisfying a minimum power ratio threshold; and
establishing (815, 925) a connection to a cell based on the second candidate.

2. The method of claim 1, further comprising generating (915), at the UE (105, 205, 705), an increased power ratio threshold based on the respective power ratios of the two or more accumulations of the second candidate satisfying the minimum power ratio threshold, the increased power ratio threshold being greater than the power ratio threshold.

3. The method of claim 2, further comprising discarding a third candidate of the first set of candidates based at least on power ratios of two or more accumulations of the third candidate failing to satisfy the increased power ratio threshold.

4. The method of any one of claims 1 to 3, wherein the first candidate is discarded further based on the power ratio of the first accumulation of the first candidate and the power ratio of the second accumulation of the first candidate failing to satisfy the minimum power ratio threshold.

5. The method of any one of claims 1 to 4, wherein:
the UE (105, 205, 705) is configured to perform L accumulations based on the first candidate, and
the UE (105, 205, 705) performs less than L accumulations based on the discarding of the first candidate.

6. The method of any one of claims 1 to 5, further comprising determining a highest correlation peak energy and a second highest correlation peak energy based on correlation analysis between a known reference sequence and a signal associated with the second candidate that is received by the UE (105, 205, 705).

7. The method of claim 6, wherein the second highest correlation peak energy is selected based on a first primary synchronization signal, PSS, candidate associated with the highest correlation peak energy being at least two samples apart from a second PSS candidate associated with the second highest correlation peak energy.

8. The method of claim 6, wherein the second highest correlation peak energy may be selected based on at least one of:
a first secondary synchronization signal, SSS, candidate associated with the highest correlation peak energy having a first cell ID that is different from a second cell ID of a second SSS candidate associated with the second highest correlation peak energy, or
the first SSS candidate associated with the highest correlation peak energy having a first time-based boundary that is different from a second time-based boundary of the second SSS candidate associated with the second highest correlation peak energy.

9. The method of claim 6, further comprising determining a ratio of the highest correlation peak energy and the second highest correlation peak energy satisfies an energy threshold.

10. The method of claim 9, wherein:
the UE (105, 205, 705) is configured to perform M accumulations of correlation peak energies associated with the second candidate, and
the UE (105, 205, 705) performs less than M accumulations based on the ratio of the highest correlation peak energy and the second highest correlation peak energy satisfying the energy threshold.

11. The method of claim 9 or 10, further comprising decoding a master information block associated with the cell based on the ratio of the highest correlation peak energy and the second highest correlation peak energy satisfying the energy threshold, wherein establishing the connection to the cell is further based on decoding the master information block.

12. The method of any one of claims 1 to 11, further comprising identifying (920), based on the UE (105, 205, 705) storing one or more candidates, a second set of candidates that is a subset of the first set of candidates, the second set of candidates including the second candidate, wherein:
accumulations associated with the first set of candidates are based on primary synchronization signals received by the UE (105, 205, 705), and
accumulations associated with the second set of candidates are based on the primary synchronization signals and secondary synchronization signals received by the UE (105, 205, 705).

13. A device comprising:
one or more processors (720); and
memory storing instructions that, when executed by the one or more processors (720), cause the device to perform the method according to any one of the preceding claims.

14. The device of claim 13, wherein the device comprises the UE (105, 205, 705).
